# EUROPÄISCHE PATENTANMELDUNG

(11) **EP 4 807 209 A1**
(43) Veröffentlichungstag der Anmeldung: **16.09.2026**
(21) Anmeldenummer: 26156331.6
(22) Anmeldetag: 04.02.2026
(51) Int. Cl.: F16F 1/38, F16F 13/14

(54) **STOPPERSYSTEM FÜR EINE LAGERBUCHSE MIT EINER AUSSENHÜLSE UND EINEM KERN**

(30) Priorität: 14.03.2025 DE 102025109945
(71) Anmelder: Vibracoustic SE, 69469 Weinheim (DE)
(72) Erfinder: Dinklage, Lutz, 25337 Elmshorn (DE)
(74) Vertreter: Patentanwälte Olbricht Buchhold Keulertz

(57) **Zusammenfassung**

Die vorgestellte Erfindung betrifft ein Stoppersystem (100) für eine Lagerbuchse (200) mit einer Außenhülse und einem Kern (201),
wobei das Stoppersystem (100) umfasst:
- einen Stopper (101),
- einen Elastomerkörper (103) aus einem Elastomer,

wobei der Stopper (101) einen Anschlag (105) ausbildet, der dazu konfiguriert ist, eine Bewegung des Kerns (201) relativ zu der Außenhülse zu begrenzen,
wobei der Anschlag (205) zumindest bereichsweise relativ zu einem Grundkörper des Stoppers (101) erhöht und auf einer Außenseite des Stoppers (101) ausgebildet ist,
wobei der Elastomerkörper (103) lose an dem Stopper (101) angeordnet ist und den Stopper (101) zumindest bereichsweise umgibt.

## Beschreibung

Die vorliegende Erfindung betrifft ein Stoppersystem, eine Lagerbuchse und ein Fahrzeug gemäß den beigefügten Ansprüchen.

Stopper in Lagerbuchsen bilden Anschläge aus, die im Lastpfad zwischen Kern und Außenhülse liegen und ein Elastomer eines Tragpolsters eines Lagers und insbesondere eines Hydrolagers vor Überlastung schützen.

Bei hochdynamischen Lasten kann es zu störenden Anschlaggeräuschen, sogenanntem "Klopfen" durch einen Kontakt zwischen einem Anschlag und einer Anschlagschale der Lagerbuchse kommen. Um dem vorzubeugen, kann zwischen der Anschlagschale und dem Kern ein Elastomerkörper vorgesehen sein, der am Kern und/oder der Anschlagschale haftend verbunden ist.

Da der Kern bei typischen Lagerbuchsen sich nicht nur radial in Richtung des Stoppers bewegt, sondern sich dabei auch dreht, sind solche Elastomerkörper zwischen Kern und Anschlagschale hohem Verschleiß ausgesetzt.

Besonders robuste Lagerbuchsen basieren auf einer Elastomerlagerung zur Lagerung bzw. Abstützung des Stoppers gegenüber der Außenhülse, wie es bspw. aus der EP1770303 bekannt ist. Allerdings ist dabei der Elastomerkörper nicht nur haftend am Stopper, sondern auch außenseitig an einer Halbschale haftend festgelegt. Damit benötigen solche Lagerbuchsen zusätzlich zu dem Stopper und dem Elastomerkörper ein weiteres Bauteil, nämlich eine Halbschale, zudem müssen Anschlag und Halbschale mit einem Haftmittel versehen werden, das Kosten verursacht.

Vor diesem Hintergrund ist es eine Aufgabe der vorgestellten Erfindung, eine Möglichkeit für eine kosteneffiziente Lagerbuchse bereitzustellen, die beim Betrieb in einem Fahrzeug Klopfgeräusche vermeidet und gleichzeitig kostengünstig ist.

Es wird somit gemäß einem ersten Aspekt der vorgestellten Erfindung ein Stoppersystem für eine Lagerbuchse mit einer Außenhülse und einem Kern vorgestellt.

Das vorgestellte Stoppersystem umfasst einen Stopper und einen Elastomerkörper aus einem Elastomer, wobei der Stopper einen Anschlag ausbildet, der dazu konfiguriert ist, eine Bewegung des Kerns relativ zu der Außenhülse zu begrenzen, wobei der Anschlag zumindest bereichsweise relativ zu einem Grundkörper des Stoppers erhöht und auf einer Außenseite des Stoppers ausgebildet ist, und wobei der Elastomerkörper lose an dem Stopper angeordnet ist und den Stopper zumindest bereichsweise umgibt.

Im Kontext der vorgestellten Erfindung ist unter einer losen Anordnung zweier Komponenten eine nicht haftende bzw. "non-bonded" Verbindung zu verstehen, bei der die Komponenten ohne Haftmittel aneinander angeordnet, insbesondere lose aufeinandergelegt bzw. lösbar mechanisch miteinander verklemmt, insbesondere gesteckt, sind und entsprechend beschädigungsfrei voneinander getrennt werden können.

Aufgrund der erfindungsgemäß vorgesehenen losen Anordnung des Elastomerkörpers an dem Stopper kann auf Haftmittel zum Anhaften des Elastomerkörpers an dem Stopper verzichtet werden, wodurch Kosten für das Haftmittel und einen Prozess zum Aufbringen des Haftmittels gespart werden.

Weiterhin sind ungehaftete Elastomerkörper, die auch als "Gummiformteile" bekannt sind, sehr kostengünstig herstellbar, sodass das vorgestellte Stoppersystem auch aus diesem Grund deutliche Kostenvorteile aufweist.

Ferner kann durch das vorgestellte Stoppersystem auf eine Halbschale zur Lagerung des Elastomerkörpers verzichtet werden, da der Elastomerkörper lediglich an dem Stopper angeordnet, insbesondere auf die Außenseite des Stoppers aufgelegt, ist.

Bspw. kann der Elastomerkörper selbst als Halbschale ausgestaltet sein und den Stopper auf seiner Außenseite umgreifen, d.h. radial zumindest bereichsweise umgeben.

Es kann vorgesehen sein, dass der Elastomerkörper beschädigungsfrei von dem Stopper demontierbar ist.

Zur Demontage des Elastomerkörpers von dem Stopper kann der Elastomerkörper bspw. elastisch verformt und von dem Stopper abgezogen werden, ohne das der Elastomerkörper oder der Stopper beschädigt werden.

Es kann weiterhin vorgesehen sein, dass der Elastomerkörper den Stopper hinterschnittig, insbesondere hinterschnittig in Umfangsrichtung, umgreift.

Durch einen hinterschnittigen Eingriff des Elastomerkörpers in den Stopper bzw. um den Stopper wird eine Bewegung des kompletten Elastomerkörpers relativ zu dem Stopper, insbesondere in axialer Richtung und/oder in radialer Richtung, zuverlässig minimiert bzw. verhindert.

Weiterhin bedingt ein hinterschnittiger Eingriff des Elastomerkörpers in den Stopper bzw. um den Stopper eine besonders genaue Ausrichtung bzw. Positionierung des Elastomerkörpers an dem Stopper.

Es kann weiterhin vorgesehen sein, dass der Elastomerkörper ausschließlich durch eine Klemmkraft zwischen dem Elastomerkörper und dem Stopper an dem Stopper hält. Alternativ oder zusätzlich kann der Elastomerkörper den Stopper mittels Formschluss in Position halten.

Durch eine Befestigung bzw. Anordnung des Elastomerkörpers an dem Stopper lediglich durch eine Klemmkraft und/oder Formschluss zwischen dem Elastomerkörper und dem Stopper kann auf ein Haftmittel zwischen dem Elastomerkörper und dem Stopper verzichtet werden, wodurch Kosten bei der Herstellung des vorgestellten Stoppersystems gespart werden.

Weiterhin ermöglicht eine Befestigung bzw. Anordnung des Elastomerkörpers an dem Stopper lediglich durch eine Klemmkraft und/oder Formschluss zwischen dem Elastomerkörper und dem Stopper eine partielle bzw. reversible Bewegung des Elastomerkörpers relativ zu dem Stopper, bspw. wenn das Stoppersystem lokal mit einer großen Kraft beaufschlagt wird und der Elastomerkörper sich elastisch verformt.

Es kann weiterhin vorgesehen sein, dass der Elastomerkörper eine Ausnehmung umfasst, in die der Anschlag des Stoppers eingreift.

Eine Ausnehmung bzw. eine Öffnung des Elastomerkörpers, durch die der Anschlag des Stopper hindurch ragt, ermöglicht einen Kontakt zwischen dem Anschlag und einer Außenhülse einer Lagerbuchse, bspw. für den Fall einer besonders starken mechanischen Belastung der Lagerbuchse, ohne den Elastomerkörper übermäßig zu beanspruchen. Diese übermäßige Beanspruchung wird dadurch verhindert, dass der Elastomerkörper in dem Moment nicht weiter gequetscht bzw. auf Druck beansprucht wird, indem der Anschlag auf die Außenhülse trifft und damit alle weiteren Lasten über diesen Lastpfad wirken.

Weiterhin bedingt ein Eingriff des Anschlags des Stoppers in eine Ausnehmung des Elastomerkörpers eine zusätzliche Fixierung des Elastomerkörpers an dem Stopper, die den Elastomerkörper auch bei großen radialen Kräften relativ zu dem Stopper in seiner vorgegebenen Position hält bzw. zurück in seine vorgegebene Position drängt.

Es kann weiterhin vorgesehen sein, dass ein die Ausnehmung umgrenzender Rand des Elastomerkörpers relativ zu dem Anschlag in Radialrichtung übersteht.

Durch einen Überstand eines die Ausnehmung umgrenzenden Randes des Elastomerkörpers relativ zu dem Anschlag, sodass der Rand höher ist als der Anschlag, kann ein Freiweg des Anschlags bis zum Kontakt zwischen dem Anschlag und der Außenhülse der Lagerbuchse eingestellt werden. Insbesondere kann der Überstand des Randes einen Verlauf einer Kraft, die bei einem Kontakt zwischen dem Stoppersystem und der Außenhülse in das Stoppersystem eingeleitet wird, vorgeben, sodass der Anschlag langsam bzw. weich auf die Außenhülse aufläuft und Klopfgeräusche, die durch einen besonders starken Impuls bei einem Kontakt des Anschlags mit der Außenhülse erzeugt werden, minimiert bzw. vermieden werden.

Es kann weiterhin vorgesehen sein, dass der Elastomerkörper einen Basisbereich und eine Anzahl Konturierungen aufweist, wobei die Anzahl Konturierungen dazu konfiguriert ist, einen Steifigkeitsverlauf des Elastomerkörpers bei einer mechanischen Belastung des Elastomerkörpers durch eine Radialkraft vorzugeben.

Konturierungen, wie bspw. Ausnehmungen und/oder Erhöhungen, insbesondere Nuten und Berge des Elastomerkörpers, insbesondere im Bereich um den Anschlag herum, ermöglichen eine Kontrolle bzw. eine Vorgabe eines Steifigkeitsverlaufs des Elastomerkörpers bei einer mechanischen Belastung des Elastomerkörpers durch eine Radialkraft, die bei einem Kontakt zwischen dem Stoppersystem und der Außenhülse in das Stoppersystem eingeleitet wird, sodass Klopfgeräusche, die durch einen besonders starken Impuls bei einem Kontakt des Anschlags mit der Außenhülse erzeugt werden, minimiert bzw. vermieden werden.

Entsprechend kann vorgesehen sein, dass zumindest eine Konturierung der Anzahl Konturierungen relativ zu dem Basisbereich übersteht und/oder eine Ausnehmung in dem Elastomerkörper bildet.

Ein Basisbereich des Elastomerkörpers ist bspw. eine Grundfläche, in bzw. auf der die Konturierungen ausgebildet sind. Ein Basisbereich kann im Wesentlichen flach sein und sich zumindest bereichsweise radial entlang der Außenfläche des Stoppers erstrecken.

Es kann weiterhin vorgesehen sein, dass die Anzahl Konturierungen auf einer Innenseite und/oder auf einer Außenseite des Elastomerkörpers ausgebildet ist.

Konturierungen auf einer Innenseite, d.h. einer zu dem Stopper hin orientierten Seite des Elastomerkörpers, ermöglichen, insbesondere in Kombination mit Konturierungen auf einer der Innenseite gegenüberliegenden Außenseite, einen besonders sanften Übergang der Steifigkeitskennlinie beim Kontakt des Stoppers mit dem Kern.

Konturierungen auf einer Außenseite, d.h. einer von dem Stopper weg orientierten Seite des Elastomerkörpers, sind grundsätzlich auch möglich und wirken bzgl. der Stopperkennlinie analog zu den Konturierungen auf der Innennseite.

Es kann weiterhin vorgesehen sein, dass bei einer Anordnung der erfindungsgemäßen Stopper in einem Hydrolager oder einer Hydrobuchse an der Außenseite des Elastomerkörpers eine Anzahl Fluidkanäle zum Leiten eines Fluids ausgebildet sind.

Fluidkanäle zum Leiten eines Fluids, wie bspw. eines Fluids eines Hydrolagers, bedingen ein vorgegebenes Dämpfungs- bzw. Tlgungsverhalten des Hydrolagers bzw. der Hydrobuchse. Dazu können die Fluidkanäle bspw. in ihrem Querschnitt und/oder Länge an das gewünschte Dämpfungsverhalten angepasst werden.

In vorteilhafter Ausführung sind die Fluidkanäle im Elastomerkörper außenhülsenzugewandt durch feine Konturierungen, die als Dichtung ausgeführt sind, umgeben. Diese als Dichtung der Fluidkanäle fungierenden Konturierungen sind so auszuführen, dass die Fluidkanäle im unbelasteten Zustand des Stoppers eine zuverlässige Abdichtung der Fluidkanalgeometrie ermöglichen.

Es kann weiterhin vorgesehen sein, dass die Anzahl Fluidkanäle sich in Umfangsrichtung des Elastomerkörpers erstreckt.

Es kann weiterhin vorgesehen sein, dass der Elastomerkörper an mindestens einem Ende eine Durchströmungsöffnung aufweist, die mit mindestens einem Fluidkanal der Anzahl Fluidkanäle fluidleitend gekoppelt ist.

Eine Durchströmungsöffnung kann verwendet werden, um das beim Einfedern des Stoppers durch den Anschlag und die Vorformung des Elastomers zwischen Elastomerpolster und Außenhülse verdrängte Fluidvolumen fluidleitend mit der Kammer, in dem sich der Stopper befindet, zu verbinden. Hierdurch werden Geräusche durch das Verdrängen des Fluides aus dem Stoppersystem vermindert oder verhindert.

Gemäß einem zweiten Aspekt betrifft die vorgestellte Erfindung eine Lagerbuchse.

Die vorgestellte Lagerbuchse umfasst einen Kern, mindestens eine mögliche Ausgestaltung des vorgestellten Stoppersystems, einen an dem Kern ausgebildeten Radialanschlag und eine Außenhülse, wobei der Radialanschlag ein stoffeinheitlicher Teil des Kerns ist oder stoffschlüssig oder formschlüssig mit dem Kern verbunden ist, wobei die Außenhülse den Kern, das mindestens eine Stoppersystem und den Radialanschlag umhüllt, und wobei der Elastomerkörper des mindestens einen Stoppersystems zwischen dem Radialanschlag und der Außenhülse angeordnet und dazu konfiguriert ist, eine Bewegung des Kerns relativ zu der Außenhülse zu begrenzen.

Unter einem Radialanschlag eines Kerns ist im Kontext der vorgestellten Erfindung ein durch den Kern bzw. an dem Kern ausgebildeter Bereich zu verstehen, an dem eine Kraftübertragung von dem Stoppersystem auf den Kern stattfindet, wenn die Lagerbuchse mit einer mechanischen Last beaufschlagt wird. Ein Radialanschlag kann bspw. ein Stützelement ausbilden, an dem sich der Elastomerkörper abstützt. Durch geeignete sphärische Ausbildung des Radialanschlages können beispielsweise die kardanischen Eigenschaften des Lagers in vorteilhafter Weise angepasst werden.

Insbesondere kann der Radialanschlag ein an den Kern, der bspw. metallisch sein kann, angespritzter Kunststoff sein.

Es kann vorgesehen sein, dass die Lagerbuchse ein radial und/oder axial dämpfendes oder tilgendes Hydrolager ist.

Das vorgestellte Stoppersystem hat sich als besonders vorteilhaft beim Einsatz in Hydrolagern, insbesondere in Fahrzeugen erwiesen, um störende Klopfgeräusche während einer Fahrt kosteneffizient zu minimieren bzw. zu verhindern.

Gemäß einem dritten Aspekt betrifft die vorgestellte Erfindung ein Fahrzeug, wobei das Fahrzeug mindestens eine mögliche Ausgestaltung der vorgestellten Lagerbuchse umfasst.

Das vorgestellte Fahrzeug kann bspw. ein Personenkraftwagen oder ein Lastkraftwagen sein. Dabei kann die Lagerbuchse im Fahrzeug beispielsweise Teil des Fahrwerks sein, sie kann aber auch Aggregate oder Motoren, insbesondere E-Motoren, oder Fahrerhauskabinen lagern.

Aufgrund des vorgestellten Stoppersystems ist das vorgestellte Fahrzeug besonders komfortabel, robust und kosteneffizient.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine mögliche Ausgestaltung des vorgestellten Stoppersystems,
- Fig. 2: eine mögliche Ausgestaltung der vorgestellten Lagerbuchse,
- Fig. 3: eine Draufsicht der Lagerbuchse gemäß Fig. 2,
- Fig. 4: eine geschnittene Darstellung der Lagerbuchse gemäß Fig. 2, und
- Fig. 5: eine mögliche Ausgestaltung des vorgestellten Fahrzeugs.

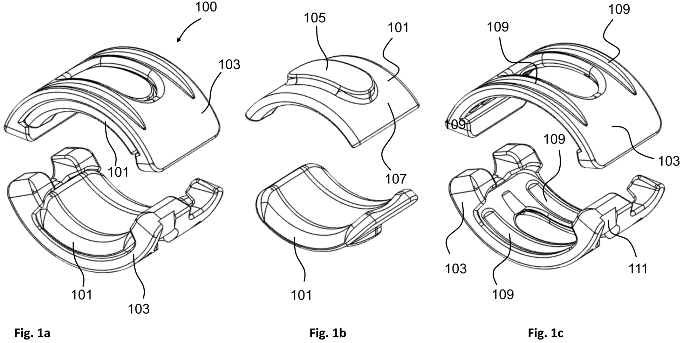

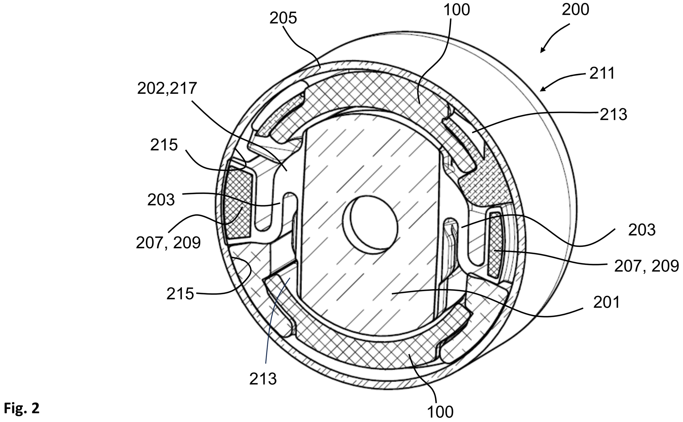

In Fig. 1a ist ein Stoppersystem 100 für eine bspw. in Fig. 2 dargestellte Lagerbuchse 200 mit einer Außenhülse 205 und einem Kern 201. Das Stoppersystem 100 umfasst paarige Stopper 101, an denen jeweils ein Elastomerkörper 103 angeordnet ist. Dabei können die paarigen Stopper jeweils auf die gewünschten Freiwege und Lasten abgestimmt werden und müssen daher nicht identisch ausgeführt sein.

Ein jeweiliger Elastomerkörper 103 ist lose an einem jeweiligen Stopper 101 angeordnet bzw. verklemmt und umgibt den Stopper 101 radial ohne ein zusätzliches zwischen dem Stopper 101 und dem Elastomerkörper 103 eingebrachtes Haftmittel.

Die Elastomerkörper 103 umgreifen jeweils eines Stopper 101 an seinen Enden durch Vorsprünge 113 und umgeben diesen formschlüssig.

In Fig. 1b sind die Stopper 101 im Detail dargestellt. Jeder Stopper 101 bildet einen Anschlag 105 aus, der dazu konfiguriert ist, eine Bewegung des Kerns 201 relativ zu der Außenhülse 205 zu begrenzen.

Der Anschlag 105 ist zumindest bereichsweise relativ zu einem Grundkörper 107 des Stoppers 101 erhöht und auf einer Außenseite des Stoppers 101 ausgebildet. Da der Grundkörper 107 nahezu das gesamte Fenster im Käfig des Tragkörpers der als Hydrolager ausgeführten Lagerbuchse 200 ausfüllt, ist der Druck, den er auf den Elastomerkörper 103 lokal einleitet gering. Hierdurch reduzieren sich bei gegebener Belastung des Stoppers die lokalen Dehnungen im Vergleich zu einem kleineren Grundkörper 107, was zu einer hohen Lebensdauer des Stoppersystems führt. Bevorzugt füllt der Grundkörper 107 90 % der Fläche eines Fensters im Käfig aus.

In Fig. 1c sind die Elastomerkörper 103 im Detail dargestellt.

Jeder Elastomerkörper 103 weist vorliegend beispielhaft Konturierungen 109 auf, welche zu einem weichen Progressionsanstieg der Kraft-Weg-Kurve der Lagerbuchse 200 mit dem Stoppersystem 100 führt.

Durch die Elastomerkörper 103, insbesondere durch die Konturierungen 109 wird der Übergang des Steifigkeitsverlaufes bei Kontakt des Anschlags 105 mit dem Kern weicher ausgeführt Und entsprechend ein Klopfen bzw. ein Klopfgeräusch vermieden.

Weiterhin bildet zumindest einer der Elastomerkörper 103 einen Fluidkanal 111 aus, der ein Durchströmen des Stoppersystems 100 mit einem ggf. in der Lagerbuchse 200 befindlichen Fluid ermöglicht. Durch die Ausgestaltung des Fluidkanals 111 kann ein Dämpfungsverhalten der Lagerbuchse 200 vorgegeben werden, indem bspw. der Fluidkanal 111 derart ausgestaltet wird, dass das Dämpfungsmaximum bei einer defineirten Frequenz erreicht wird..

In Fig. 2 ist eine Lagerbuchse 200 in einer geschnittenen Darstellung dargestellt. Die Lagerbuchse 200 umfasst einen Tragkörper 217, bestehend aus einem Kern 201 mit ausgebildeten Radialanschlägen 203 sowie einem Käfig 207, wobei der Käfig 207 aus zwei Käfigstegen 209 sowie zwei nicht dargestellten, buchsenstirnseitig angeordneten Käfigringsegmenten 211 besteht, und einem den Kern 207 und den Käfig verbindenden Tragkörperelastomerkörper 202, wobei der Tragkörper 217 zwei Fluidkammern 213 ausbildet, die radialaußenseitig, der Außenhülse 205 zugewandt, sich in zwei Fenster 215 erstrecken, sowie zwei Exemplare des bspw. in Fig. 1 dargestellten Stoppersystems 100, die in den beiden Fenstern 215 angeordnet sind und eine Außenhülse 205.

Die Radialanschläge 203 sind vorliegend beispielhaft als an den Kern 201 angespritzte Kunststoffteile ausgestaltet.

Die Außenhülse 205 umhüllt den Kern 201, die Stoppersysteme 100 und die Radialanschläge 203.

Die Radialanschläge 203 sind vorliegend beispielhaft formschlüssig zu jeweiligen Enden der Elastomerkörper 103 ausgestaltet und begrenzen eine radiale Bewegung des jeweiligen Stoppersystems 100 zu dem Kern 201.

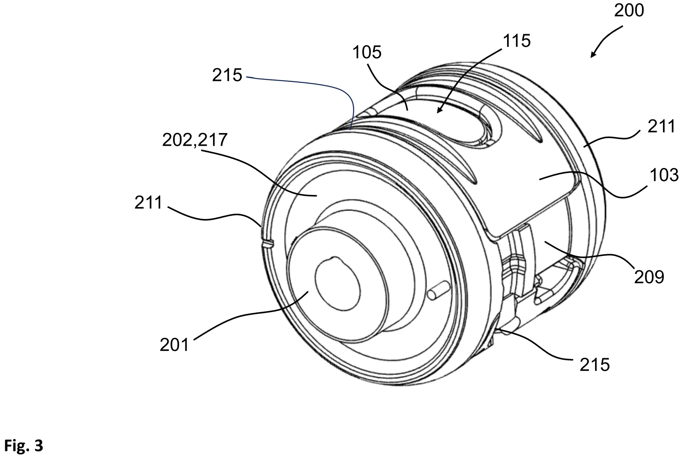

In Fig. 3 ist die Lagerbuchse 200 in einer perspektivischen Draufsicht dargestellt. Hier ist gut erkennbar, dass der Anschlag 105 in eine Ausnehmung 115 des Elastomerkörpers 103 hineinragt, wobei der Elastomerkörper 103 gegenüber dem Anschlag 105 radial übersteht. Der Elastomerkörper 103 des Stoppersystems 100 ist im Fenster 215 des Tragkörpers 219 angeordnet. Der Tragkörperelastomerkörper 202 ist innenseitig am Kern 201 anvulkanisiert und außenseitig am den Käfigringsegmenten 211, sowie den Käfigstegen 209.

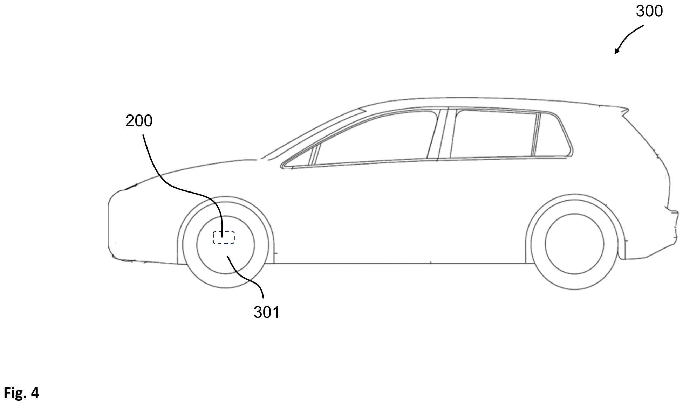

In Fig. 4 ist ein Fahrzeug 300 dargestellt. Das Fahrzeug 300 umfasst bspw. an seinem Lenksystem 301 eine Lagerbuchse 200 gemäß Fig. 2.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 100: Stoppersystem
- 101: Stopper
- 103: Elastomerkörper
- 105: Anschlag
- 107: Grundkörper
- 109: Konturierung
- 111: Fluidkanal
- 113: Vorsprung
- 115: Ausnehmung
- 200: Lagerbuchse
- 201: Kern
- 202: Tragkörperelastomerkörper
- 203: Trennmembran
- 205: Außenhülse
- 207: Käfig
- 209: Käfigsteg
- 211: Käfigringsegment
- 213: Fluidkammer
- 215: Fenster
- 217: Tragkörper
- 300: Fahrzeug
- 301: Lenksystem

## Patentansprüche

1. Stoppersystem (100) für eine Lagerbuchse (200) mit einer Außenhülse (205) und einem Kern (201),
wobei das Stoppersystem (100) umfasst:
- einen Stopper (101),
- einen Elastomerkörper (103) aus einem Elastomer,
wobei der Stopper (101) einen Anschlag (105) ausbildet, der dazu konfiguriert ist, eine Bewegung des Kerns (201) relativ zu der Außenhülse (205) zu begrenzen,
wobei der Anschlag (205) zumindest bereichsweise relativ zu einem Grundkörper des Stoppers (101) erhöht und auf einer Außenseite des Stoppers (101) ausgebildet ist, wobei der Elastomerkörper (103) lose an dem Stopper (101) angeordnet ist und den Stopper (101) zumindest bereichsweise umgibt.

2. Stoppersystem (100) nach Anspruch 1,
**dadurch gekennzeichnet,**
**dass** der Elastomerkörper (103) beschädigungsfrei von dem Stopper (101) demontierbar ist.

3. Stoppersystem (100) nach Anspruch 1 oder 2,
**dadurch gekennzeichnet,**
**dass** der Elastomerkörper (103) den Stopper (101) hinterschnittig, insbesondere hinterschnittig in Umfangsrichtung, umgreift.

4. Stoppersystem (100) nach einem der voranstehenden Ansprüche,
**dadurch gekennzeichnet,**
**dass** der Elastomerkörper (103) ausschließlich durch eine Klemmkraft und/oder Formschluss zwischen dem Elastomerkörper (103) und dem Stopper (101) an dem Stopper (101) hält.

5. Stoppersystem (100) nach einem der voranstehenden Ansprüche,
**dadurch gekennzeichnet,**
**dass** der Elastomerkörper (103) eine Ausnehmung (115) umfasst, in die der Anschlag des (105) Stoppers (101) eingreift.

6. Stoppersystem (100) nach einem der voranstehenden Ansprüche,
**dadurch gekennzeichnet,**
**dass** ein die Ausnehmung (115) umgrenzender Rand des Elastomerkörpers (103) relativ zu dem Anschlag (105) in Radialrichtung übersteht.

7. Stoppersystem (100) nach einem der voranstehenden Ansprüche,
**dadurch gekennzeichnet,**
**dass** der Elastomerkörper (103) einen Basisbereich und eine Anzahl Konturierungen (109) aufweist, wobei die Anzahl Konturierungen (109) dazu konfiguriert ist, einen Steifigkeitsverlauf des Elastomerkörpers (103) bei einer mechanischen Belastung des Elastomerkörpers (103) durch eine Radialkraft vorzugeben.

8. Stoppersystem (100) nach Anspruch 7,
**dadurch gekennzeichnet,**
**dass** zumindest eine Konturierung (109) der Anzahl Konturierungen (109) relativ zu dem Basisbereich übersteht und/oder eine Ausnehmung in dem Elastomerkörper (103) bildet.

9. Stoppersystem (100) nach Anspruch 7 oder 8,
**dadurch gekennzeichnet,**
**dass** die Anzahl Konturierungen (109) auf einer Innenseite und/oder auf einer Außenseite des Elastomerkörpers (103) ausgebildet ist.

10. Stoppersystem (100) nach einem der voranstehenden Ansprüche,
**dadurch gekennzeichnet,**
**dass** an der Außenseite des Elastomerkörpers (103) eine Anzahl Fluidkanäle (111) zum Leiten eines Fluids ausgebildet ist.

11. Stoppersystem (100) nach Anspruch 10,
**dadurch gekennzeichnet,**
**dass** die Anzahl Fluidkanäle (111) sich in Umfangsrichtung des Elastomerkörpers (103) erstreckt.

12. Stoppersystem (100) nach Anspruch 10 oder 11,
**dadurch gekennzeichnet,**
**dass** der Elastomerkörper (103) an mindestens einem Ende eine Durchströmungsöffnung aufweist, die mit mindestens einem Fluidkanal (111) der Anzahl Fluidkanäle fluidleitend gekoppelt ist.

13. Lagerbuchse (200),
wobei die Lagerbuchse (200) umfasst:
- einen Kern (201),
- mindestens ein Stoppersystem (100) nach einem der Ansprüche 1 bis 12,
- ein an dem Kern (201) ausgebildeter Radialanschlag (203),
- eine Außenhülse (205),
wobei der Radialanschlag (203) ein stoffeinheitlicher Teil des Kerns (201) ist oder stoffschlüssig oder formschlüssig mit dem Kern (201) verbunden ist,
wobei die Außenhülse (205) den Kern (201), das mindestens eine Stoppersystem (100) und den Radialanschlag (203) umhüllt, und
wobei der Elastomerkörper (103) des mindestens einen Stoppersystems (100) zwischen dem Radialanschlag (203) und der Außenhülse angeordnet und dazu konfiguriert ist, eine Bewegung des Kerns (201) relativ zu der Außenhülse (205) zu begrenzen.

14. Lagerbuchse (200) nach Anspruch 13,
**dadurch gekennzeichnet,**
**dass** die Lagerbuchse (200) ein radial und/oder axial dämpfendes oder tilgendes Hydrolager ist.

15. Fahrzeug (300),
wobei das Fahrzeug (300) mindestens eine Lagerbuchse (200) nach Anspruch 13 oder 14 umfasst.
